(19) Europäisches Patentamt
European Patent Office
Office européen des brevets

(11) Veröffentlichungsnummer: **0 121 850**
**B1**

(12) # EUROPÄISCHE PATENTSCHRIFT

(45) Veröffentlichungstag der Patentschrift: 30.08.89

(51) Int. Cl.[4]: **C 08 G 18/32**, C 08 G 18/66, C 08 G 18/14

(21) Anmeldenummer: 84103295.6

(22) Anmeldetag: 26.03.84

(54) **Verfahren zur Herstellung eines zelligen Polyurethans.**

(30) Priorität: 05.04.83 DE 3312215

(43) Veröffentlichungstag der Anmeldung: 17.10.84 Patentblatt 84/42

(45) Bekanntmachung des Hinweises auf die Patenterteilung: 30.08.89 Patentblatt 89/35

(84) Benannte Vertragsstaaten:
AT BE CH DE FR GB IT LI NL SE

(56) Entgegenhaltungen:
EP-A- 0 078 436
BE-A- 681 430
DE-A- 2 621 582
FR-A- 2 121 556
Die Akte enthält technische Angaben, die nach dem Eingang der Anmeldung eingereicht wurden und die nicht in dieser Patentschrift enthalten sind.

(73) Patentinhaber: BAYER AG
D-5090 Leverkusen 1 Bayerwerk (DE)

(72) Erfinder: Rasshofer, Werner, Dr.
Wolfskaul 10
D-5000 Köln 80 (DE)
Erfinder: Prolingheuer, Ernst-Christoph, Dr.
Brunnenstrasse 24
D-4690 Herne 1 (DE)

EP 0 121 850 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

## Beschreibung

Die vorliegende Erfindung betrifft ein Verfahren zur Herstellung von zelligen Polyurethanen unter Verwendung von nach bestimmten Verfahren hergestellten flüssigen Addukten aus ein oder mehrere Hydroxylgruppen aufweisenden Mono- oder Polyaminen und Kohlendioxyd, insbesondere unter Mitverwendung von flüssigen Kohlensäuresalzen solcher Hydroxylgruppe (n) aufweisenden Mono- oder Polyamine.

Die Verwendung von Kohlendioxyd-Addukten von Hydroxyaminen bei der Herstellung von Polyurethanen ist an sich bekannt. So ist in der DE-OS 2 200 480 die Verwendung von Ethanolamin-Carbamat in einem Verfahren zur Herstellung eines zelligen PU-Elastomers erwähnt. Aus DE-PS 2 621 582 geht hervor, daß Carbamate, die Umsetzungsprodukte von primären oder sekundären Aminen mit ein oder zwei Hydroxylgruppen mit Kohlendioxyd darstellen, in fester Form erhalten werden, wenn man sie durch Einleiten von Kohlendioxyd in Alkohol oder andere Lösungsmittel herstellt und sich mit einem Polyol nicht einphasig homogen vermischen lassen. Dieser Veröffentlichung ist kein Hinweis darant zu entnehmen, daß derartige Kohlendioxid-Addukte bei Raumtemperatur flüssig sein oder flüssig erhalten werden können.

Daß flüssige Carbamate von Aminogruppen aufweisenden Verbindungen existieren, lehrt DE-OS 1 570 571. Dieses Dokument ist jedoch beschränkt auf Ethergruppen aufweisende Diamine oder Polyamine, wobei 0,01-50 % der Aminogruppen durch eine Hydroxylgruppe ersetzt sein können. Es werden bevorzugt relativ hochmolekulare Amine mit in der Regel nur geringem Gehalt an basischem Stickstoff und oftmals an sekundären Kohlenstoffatomen befindlichen Aminogruppen eingesetzt, die nur geringe Kohlendioxyd-Aufnahme erbringen. Werden derartige Addukte als Treib- und Vernetzungsmittel bei der Herstellung von Polyurethanschaumstoffen eingesetzt, so entfalten sie naturgemäß nur eine sehr schwache Treibwirkung.

Die Verwendung der Produkte gemäß DE-OS 2 200 480 und DE-PS 2 621 582 zur Herstellung von Polyurethanschaumstoffen ist gleichfalls bekannt.

Aufgabe der vorliegenden Erfindung war, niedermolekulare, flüssige, niederviskose Addukte von Kohlenstoffdioxyd an Hydroxylgruppen aufweisenden Mono- oder Polyaminen zur Verfügung zustellen, die einen hohen Amin- und Kohlendioxyd-Gehalt aufweisen und die sich hervorragend als Treib- und Vernetzungsmittel bei der Herstellung von geschäumten Polyurethanen eignen. Mischungen aus solchen Addukten und mind. zwei NCO-aktive Wasserstoffatome enthaltende Gruppen aufweisenden Polyolen sind homogen, optisch klar und einphasig stabil.

Überraschenderweise wurde gefunden, daß Kohlendioxydaddukte von ein oder mehrere Hydroxyalkylgruppen aufweisenden Mono- oder Polyaminen, wobei die Aminogruppen primärer und/oder sekundärer und gegebenenfalls auch tertiärer Natur sein können und wobei sie substituiert an oder Kettenglied in acyclischen oder cyclischen aliphatischen Grundkörpern sein können, flüssig erhalten werden und in flüssiger Form ohne Kristallisation erhalten bleiben, wenn sie durch Versetzen von Kohlendioxyd und gegebenenfalls Wasser mit den Hydroxylgruppen aufweisenden Aminen in Abwesenheit von organischen Lösungsmitteln hergestellt werden, und daß die solchermaßen hergestellten Addukte homogen in den zur Herstellung von Polyurethanen für gewöhnlich verwendeten Polyolen, insbesondere solchen mit einer Funktionalität $\geq 2$ und einem Molekulargewicht von 60-2 000, löslich sind.

Die erfindungsgemäß zu verwendenden Addukte weisen nicht die Nachteile der Carbamate des Standes der Technik auf. So spricht die DE-PS 2 621 582 davon, daß Amincarbamate der besagten « Amine im allgemeinen hygroskopisch » sind, und daß « das Amincarbamat, das getrennt synthetisiert, isoliert und gereinigt worden ist, in Form eines feinen Pulvers schwer gelagert werden kann », und daß « unzureichende Dispersion in dem Polyol » besteht.

DE-OS 2 200 480 lehrt, daß die Amincarbamate im allgemeinen ab etwa 35 °C thermisch nicht mehr stabil sind und zerfallen. Ähnliches lehrt die DE-OS 1 570 571. Hiernach dürfen die betreffenden Amine nur bei — 40 bis + 40 °C, bevorzugt 0-20 °C, durch Umsetzung mit $CO_2$ in die Carbamate überführt werden. Die beispielsweise hergestellten Carbamate dieser Vorveröffentlichung zersetzen sich zum größten Teil bereits bei Raumtemperatur oder bei 30 °C.

Demgegenüber sind die gemäß der vorliegenden Erfindung zu verwendenden flüssigen Kohlendioxyd-Addukte überraschend stabil. Sie werden bei Temperaturen bis 80-90 °C oder noch höher hergestellt, teilweise erfolgt sogar erst bei dieser Temperatur zügige Aufnahme von Kohlendioxyd. Die in den Vorveröffentlichungen als nachteilig geschilderte Hygroskopizität der kristallinen Carbamate der Hydroxylgruppen aufweisenden Amine wird bei den erfindungsgemäß einzusetzenden Addukten nicht beobachtet ; sie sind flüssig und sehr gut zur Herstellung der zelligen Polyurethane geeignet. Sie können ferner längere Zeit auf Temperaturen < 100 °C, z. B. 50 °C erhitzt werden, oder bei Raumtemperatur mit Vakuum, z. B. 20 mbar, behandelt werden, ohne daß Kohlendioxyd-Entweichung oder gegebenenfalls Wasserverlust zu beobachten wäre.

Flüssige Addukte von $CO_2$ an Hydroxylgruppen aufweisende Amine, mit solchen Eigenschaften waren aus dem Stand der Technik nicht bekannt, ebensowenig ihre Verwendung in einem Verfahren zur Herstellung von geschäumten Polyurethan- und/oder Polyharnstoff-Kunststoffen, in dem sie aufgrund

ihrer Stabilität, Löslichkeit und ihres flüssigen Aggregatzustands gegenüber den Carbamaten und Carbonaten des Standes der Technik mit Vorteil verarbeitbar sind.

Gegenstand der vorliegenden Erfindung ist ein Verfahren zur Herstellung eines zelligen Polyurethans durch Umsetzung

A) eines Polyisocyanats mit

B) einer NCO-reaktiven Komponente, enthaltend

1) mind. eine, NCO-reaktive Gruppen aufweisende Komponente des Molekulargewichtsbereiches 32-2 000 und der Funktionalität 2-8,

2) gegebenenfalls mindestens eine, NCO-reaktive Gruppen aufweisende Komponente des Molekulargewichtsbereiches 2 000-12 000 und der Funktionalität 2-8,

3) 0,1-30 Tle., bezogen auf 100 Tle. B1) + B2), eines Hydroxylgruppen aufweisenden Amin-Kohlendioxyd-Adduktes, sowie

4) gegebenenfalls Wasser, Treibmittel, Schaumstabilisatoren, Katalysatoren sowie andere an sich bekannte Hilfs- und Zusatzmittel,

dadurch gekennzeichnet, daß das Amin-Kohlendioxyd-Addukt ein bei 20 °C flüssiges, gegebenenfalls Wasser enthaltendes Addukt von Kohlendioxyd mit einem mindestens eine primäre, sekundäre oder tertiäre Hydroxylgruppe aufweisenden, Ethergruppen-freien Amin mit mindestens einer Aminogruppe darstellt und

a) einen Gehalt an basischem Stickstoff von 19 bis 3,5 Gew.-%,
b) einen Gehalt an Hydroxylgruppen von 27,5 bis 8,5 Gew.-%,
c) einen Gehalt an Kohlendioxyd von 42 bis 1,0 Gew.-% und
d) einen Gehalt an Wasser von 0 bis 15 Gew.-%

aufweist, wobei das Addukt in Abwesenheit von organischen Lösungsmitteln hergestellt worden ist und wobei solche Aminkomponenten ausgenommen sind, die weniger als 10 Gew.-%, bezogen auf die Aminkomponente, an Hydroxylgruppen-freien Aminen enthalten.

Erfindungsgemäß bevorzugt ist ein solches Verfahren, bei dem das flüssige Addukt durch Einwirkung von Kohlendioxyd auf ein Amin aus der Reihe

— der N-Mono-, N,N-Di- und N,N,N-Tris-(β-hydroxyalkyl)-monoamine,
— der Mono und Bis-hydroxyalkyl-diamine,
— Tris-(β-hydroxyalkyl) ethylendiamin,
— Tetra-(β-hydroxyethyl)- und -(β-hydroxypropyl) ethylendiamin,
— Tetra-(β-hydroxyethyl)-isophorondiamin,
— der oxalkylierten Tri- und Polyamine,
— von β-Hydroxyethyl- und β-Hydroxypropylhydrazin

erhalten worden ist.

Bevorzugt ist weiter ein Verfahren gemäß Erfindung, dadurch gekennzeichnet, daß das flüssige Amin-Kohlendioxyd-Addukt

a) einen Gehalt an basischem Stickstoff von 17 bis 3,5 %
b) einen Gehalt an Hydroxylgruppen von 20,5 bis 8,5 %
c) einen Gehalt an Kohlendioxyd von 36 % bis 2,5 Gew.-% und
d) einen Gehalt an Wasser von 3 bis 15 Gew.-%

aufweist.

Bevorzugt sind die flüssigen Amin-Kohlendioxyd-Addukte von Ethanolamin, Diethanolamin, Propanolamin, Isopropanolamin, Diisopropanolamin und N-Hydroxyethylethylendiamin, welche in Gegenwart von Wasser hergestellt wurden.

Erfindungsgemäß bevorzugt ist ferner, daß als Polyisocyanate gegebenenfalls modifizierte Toluylendiisocyanate oder Phosgenierungsprodukte von Formaldehyd/Anilin-Kondensaten und daß als Komponente B1) 3-6 Hydroxylgruppen aufweisende Polyether des Molekulargewichts 200-1 000 verwendet werden.

Als Verbindungen mit mindestens einer primär, sekundär oder tertiär gebundenen Hydroxylgruppe und mindestens einer primären, sekundären und gegebenenfalls tertiären Aminogruppe kommen zur Herstellung der Addukte B3) in Frage :

Monoamino-mono- oder -dihydroxyverbindungen (mit primären oder sekundären Aminogruppen), z. B. 2-Amino- ethanol, 2-Methyl-2-aminoethanol, 2-Ethyl-2-aminoethanol, 6-Hydroxyhexylamin ; ferner Bis-hydroxyalkylderivate primärer Amine, z. B. Bis-β-hydroxyethyl-amin, Bis-(β-hydroxy-ethyl)-methylamin, Bis-(β-hydroxyethyl)-butylamin, Bis-(β-hydroxyethyl)-oleylamin, Bis-(β-hydroxypropyl)-amin, Bis-(β-hydroxypropyl)-methylamin, Bis-(β-hydroxy-propyl)-hexylamin oder N,N,N'-Tris-(β-hydroxypropyl)-ethylendiamin ; ferner Verbindungen wie 3-Aminomethyl-3,5,5-trimethyl-cyclohexanol, 2-Amino-2-hydroxymethyl-1,3-propandiol, 2-Amino-2-methyl-1,3-propandiol oder 2-Amino-2-methyl-propanol.

Mono-oxalkylierte Diamine, abgeleitet aus aliphatischen gerad- oder verzweigtkettigen Diaminen, vorzugsweise mit 2 bis 12 Kohlenstoffatomen oder gegebenenfalls alkylsubstituierten cycloaliphatischen Diaminen der Cyclohexan-, Dicyclohexyl-, Dicyclohexylmethan-, Di-cyclohexyl-2,2-propan- und Dicyclohexyl-1,1-cyclohexan-Reihe und Alkylenoxiden wie Ethylenoxid, Propylenoxid, Butylen-2,3-oxid oder auch Styroloxid. Bevorzugt werden mono-oxalkylierte aliphatische Diamine mit 2 bis 6 C-Atomen und gegebenenfalls cycloaliphatische Diamine, welche mit Ethylenoxid- oder Propylenoxid oxalkyliert wurden. Beispiele sind N-(β-hydroxyethyl-)-ethylendiamin, N-(β-hydroxyethyl)-propylendiamin-1,2, N-(β-hydroxyethyl)-propandiamin-1,3, N-(β-hydroxyethyl)-hexandiamin-1,6-N-(β-hydroxyethyl)-dodecandiamin1,12, N-(β-hydroxypropyl)-ethylendiamin, N-(β-hydroxypropyl)-propylendiamin-1,2, N-(β-hydroxypropyl)-propandiamin-1,3, N-(β-hydroxypropyl)-butandiamin-1,4, N-(β-hydroxybutyl)-ethylendiamin, N-(β-hydroxybutyl)-hexandiamin-1,6, N-(β-hydroxyethyl)-xylylendiamin-1,3, N-(β-hydroxyethyl)-cyclohexandiamin-1,3 oder -1,4, N-(β-hydroxyethyl)-2,2,4-trimethylhexandiamin-1,6, 1-Methyl-2-amino-4-[N-(2-hydroxyethyl)-amino]-cyclohexan, N-(β-hydroxyethyl)-isophoron-diamin, N-(β-hydroxyethyl)-4-aza-4-methyl-heptandiamin-1,7. Weiterhin geeignet sind Bis-(hydroxyalkyl)-diamine, die aus entsprechenden gerad- oder verzweigtkettigen aliphatischen oder auch cycloaliphatischen Diaminen durch Alkoxylierung mit Alkylenoxiden, vorzugsweise Ethylenoxid und/oder Propylenoxid, erhalten werden. Beispiele sind N,N'-Bis-(β-hydroxyethyl)-ethylendiamin, N,N'-Bis-(β-hydroxypropyl)-ethylendiamin, N,N'-Bis-(β-hydroxyethyl)-propylendiamin-1,2, N,N'-Bis-(β-hydroxypropyl)-propandiamin-1,3, N,N'-Bis-(β-hydroxyethyl)-1-methyl-2,4- bzw. -2,6-diaminocyclohexan, N,N'-Bis-(β-hydroxypropyl)-1-methyl-2,6- bzw. -2,4-diamino-cyclohexan, N,N'-Bis-(β-hydroxyethyl)-isophorondiamin, N,N'-Bis-(β-hydroxypropyl)-p-xylylendiamin, N-(β-hydroxyethyl)-N'-(β-hydroxypropyl)-ethylendiamin. Man kann auch oxalkylierte Tri- und Polyamine verwenden, z. B. Tris-(β-hydroxyethyl)-1,6,11-triaminoundecan. Ebenso sind Gemische verschiedener Oxalkylierungsstufen einsetzbar, z. B. Gemische aus Mono-, Bis- und Tris-hydroxethyl-ethylendiamin oder Gemische aus Mono- und Di-ethanolamin.

Als Hydroxyamine können jedoch auch Verbindungen wie 1,3-Diamino-propanol-2, 1,6-Diaminohexanol-2, 1,5-Diaminopentanol-3, 3,4-Diamino-2,2-dimethylbutanol-1, die Diaminocyclohexanole oder 1,11-Diaminoundecanol-6 verwendet werden.

Weitere geeignete Verbindungen sind β-Hydroxyethylhydrazin und β-Hydroxypropylhydrazin.

Zur Herstellung von Kohlensäureaddukten gleichfalls geeignet sind Verbindungen mit einer, vorzugsweise jedoch mehreren, Hydroxygruppen und mind. einer tertiären Aminogruppe. Dies sind z. B. Triethanolamin, Tris-β-hydroxypropylamin, Tetra-(β-hydroxyethyl)-ethylendiamin, Tetra-(β-hydroxyethyl)-ethylendiamin, Tetra-(β-hydroxyethyl)-isophorondiamin oder Di-(β-hydroxyethyl)-methylamin, Di-(β-hydroxyethyl)-butylamin oder Di-(β-hydroxypropyl)-ethylamin.

Bevorzugte Verbindungen zur Herstellung der Kohlendioxyd-Addukte sind jene Amin-Verbindungen, die man sich durch Umsetzung von 1-2 mol Ethylenoxid und/oder Propylenoxid mit Ammoniak und 1-3 mol Ethylenoxid und/oder Propylenoxid mit Ethylendiamin hergestellt denken kann.

Diese Hydroxylgruppen aufweisenden Amine werden mit Kohlendioxyd in Kohlendioxyd-Addukte überführt. Dabei wird in Abwesenheit von Lösungsmitteln, im allgemeinen bei Temperaturen von — 25 °C bis + 160 °C, vorzugsweise 0-130 °C, besonders bevorzugt 15-100 °C gearbeitet.

Die Addukte B3) werden in einer Menge von 0,1-30 Teilen, bevorzugt 0,15-15 Teilen, besonders bevorzugt 0,2-2,99 Teilen, bezogen auf 100 Teilen B1) + B2) eingesetzt.

Die Herstellung der Addukte kann mit jeder Form von Kohlendioxyd vorgenommen werden, bevorzugt wird ungereinigtes Kohlendioxyd aus Stahlbomben verwendet. Die Herstellung der Addukte kann weiterhin bei Unter-, Über-, bevorzugt jedoch bei Normaldruck vorgenommen werden. Die Temperaturen, bei denen die Herstellung vorgenommen werden kann, reichen im allgemeinen von ca. — 25 °C bis an die Siedepunkte der betreffenden Amine, soweit sie noch bei Normaldruck unter 200 °C sieden, sonst bis ca. + 160 °C. Ein engerer, bevorzugter Bereich beträgt ca. 0-130 °C besonders bevorzugt ist 15-100 °C. Dabei kann so vorgegangen werden, und dies ist bevorzugt, daß ohne Kühlung und ohne externes Erwärmen in das in einem geeigneten Rührgefäß, gegebenenfalls mit einer geeigneten Menge Wasser versetzte, vorgelegte Amin Kohlendioxyd im kräftigen Strom eingeleitet wird. Durch die in den allermeisten Fällen sofort einsetzende, unter starker Wärmeabgabe erfolgende Reaktion steigt die Gemischtemperatur rasch auf ca. 40-130 °C an. Gegen Ende der Reaktion sinkt die Temperatur deutlich ab. Bei einem durch exotherme Reaktion bedingten starken Ansteigen der Innentemperatur, z. B. auf 100 °C wird vorzugsweise extern gekühlt, um bei zu hohen Temperaturen eintretenden Nebenreaktionen (z. B. Cyclisierung) und Verfärbungen zu begegnen.

Es ist auch möglich, von vornherein das Amin bzw. Amin/$H_2O$-Gemisch auf erhöhte Temperatur zu bringen und dann erst $CO_2$ einzuleiten. Keinerlei Vorteile bringt es jedoch, obwohl es möglich ist, die Reaktionstemperaturen auf — 40-+ 40 °C , wie es in DE-OS 1 570 571 beschrieben ist, zu halten. Höhere Temperatur ist zur Verbesserung der Rührfähigkeit oftmals sogar angebracht.

Das hier über die auftretenden Reaktionswärmen und einzuhaltenden Reaktionstemperaturgrenzen Gesagte gilt sowohl für die Herstellung der Addukte aus Aminen und $CO_2$ als auch der Addukte aus Aminen, $CO_2$ und Wasser ; bei den letzteren ist jedoch zu beachten, daß bereits die Vereinigung von Amin und Wasser eine beträchtliche Wärmefreisetzung ergibt ; die bei der Kohlendioxyd-Begasung auftretenden Temperaturen liegen im Schnitt unter jenen der Herstellung von Addukten in Abwesenheit von Wasser.

Die Kohlendioxyd-Addukte sind klare, niederviskose Flüssigkeiten von im allgemeinen heller Farbe,

sie sind stabil und zeigen keinerlei Kristallisationstendenz. Sie sind im allgemeinen löslich in polaren Medien wie Methanol, Ethanol, Dimethylformamid, Acetonitril, Dimethylsulfoxid, und Sulfolan oder in niedermolekularen Polyolen der OH-Zahl von z. B. 200-1 800, wie sie durch Addition von z. B. Ethylenoxid auf z. B. Glyzerin oder Trimethylolpropan zustande kommen. Sie sind jedoch in Mengen von ca. bis 50 Gew.-% auch in den Polyolgemischen lagerstabil und einphasig klar löslich, wie sie z. B. zur Herstellung von Polyurethanhartschaum verwendet werden. Bei der erfindungsgemäßen Herstellung von zelligen Polyurethanen haben sie eine Treibmittel-, Vernetzer- und Katalysatorwirkung.

Für die Durchführung des erfindungsgemäßen Verfahrens werden eingesetzt:

Als Ausgangskomponente (A) aliphatische, cycloaliphatische, araliphatische, aromatische und heterocyclische Polyisocyanate, wie sie z. B. von W. Siefken in Justus Liebigs Annalen der Chemie, 562, Seiten 75 bis 136, beschrieben werden, beispielsweise solche der Formel

$$Q(NCO)_n$$

in der

n = 2-4, vorzugsweise 2, und

Q einen aliphatischen Kohlenwasserstoffrest mit 4-18, vorzugsweise 6-10 C-Atomen,

einen cycloaliphatischen Kohlenwasserstoffrest

mit 4-15, vorzugsweise 5-10 C-Atomen, einen aromatischen Kohlenwasserstoffrest mit 6-15, vorzugsweise 6-13 C-Atomen, oder einen araliphatischen Kohlenwasserstoffrest mit 8-15, vorzugsweise 8-13 C-Atomen, bedeuten, z. B. 1,4-Tetramethylendiisocyanat, 1,6-Hexamethylendiisocyanat, 1,12-Dodecandiisocyanat, Cyclobutan-1,3-diisocyanat, Cyclohexan-1,3- und -1,4-diisocyanat sowie beliebige Gemische dieser Isomeren, 1-Isocyanato-3,3,5-trimethyl-5-isocyanatomethyl-cyclohexan (DE-Auslegeschrift 1 202 785, US-Patentschrift 3 401 190), 2,4- und 2,6-Hexahydrotoluylendiisocyanat sowie beliebige Gemische dieser Isomeren, Hexahydro-1,3- und/oder -4,4'-diphenylmethan-diisocyanat, 1,3- und 1,4-Phenylendiisocyanat, 2,4- und 2,6-Toluylendiisocyanat sowie beliebige Gemische dieser Isomeren, Diphenylmethan-2,4' und/oder -4,4'-diisocyanat, Naphthylen-1,5-diisocyanat.

Ferner kommen beispielsweise erfindungsgemäß in Frage: Triphenylmethan-4,4',4''-triisocyanat, Polyphenyl-polymethylenpolyisocyanate, wie sie durch Anilin-Formaldehyd-Kondensation und anschließende Phosgenierung erhalten und z. B. in den GB-Patentschriften 874 430 und 848 671 beschrieben werden, m- und p-Isocyanatophenylsulfonylisocyanate gemäß der US-Patentschrift 3 454 606, perchlorierte Arylpolyisocyanate, wie sie z. B. in der DE-Auslegeschrift 1 157 601 (US-Patentschrift 3 277 138) beschrieben werden, Carbodiimidgruppen aufweisende Polyisocyanate, wie sie in der DE-Patentschrift 1 092 007 (US-Patentschrift 3 152 167) sowie in den DE-Offenlegungsschriften 2 504 400, 2 537 685 und 2 552 350 beschrieben werden, Norbornan-Diisocyanate gemäß US-Patentschrift 3 492 350, Allophanatgruppen aufweisende Polyisocyanate, wie sie z. B. in der GB-Patentschrift 994 890, der BE-Patentschrift 761 626 und der NL-Patentanmeldung 7 102 524 beschrieben werden, Isocyanuratgruppen aufweisende Polyisocyanate, wie sie z. B. in der US-Patentschrift 3 001 973, in den DE-Patentschriften 1 022 789, 1 222 067 und 1 027 394 sowie in den DE-Offenlegungsschriften 1 929 034 und 2 004 048 beschrieben werden, Urethangruppen aufweisende Polyisocyanate, wie sie z. B. in der BE-Patentschrift 752 261 oder in den US-Patentschriften 3 394 164 und 3 644 457 beschrieben werden, acylierte Harnstoffgruppen aufweisende Polyisocyanate gemäß der DE-Patentschrift 1 230 778, Biuretgruppen aufweisende Polyisocyanate, wie sie z. B. in den US-Patentschriften 3 124 605, 3 201 372 und 3 124 605 sowie in der GB-Patentschrift 889 050 beschrieben werden, durch Telomerisationsreaktionen hergestellte Polyisocyanate, wie sie z. B. in der US-Patentschrift 3 654 106 beschrieben werden, Estergruppen aufweisende Polyisocyanate, wie sie z. B. in den GB-Patentschriften 965 474 und 1 072 956, in der US-Patentschrift 3 567 763 und in der DE-Patentschrift 1 231 688 genannt werden, Umsetzungsprodukte der obengenannten Isocyanate mit Acetalen gemäß der DE-Patentschrift 1 072 385 und polymere Fettsäureester enthaltende Polyisocyanate gemäß der US-Patentschrift 3 455 883.

Es ist auch möglich, die bei der technischen Isocyanatherstellung anfallenden, Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Bevorzugt eingesetzt werden aromatische Polyisocyanate, besonders bevorzugt werden in der Regel die technisch leicht zugänglichen Polyisocyanate, z. B. das 2,4- und 2,6-Toluylendiisocyanat sowie beliebige Gemische dieser Isomeren (« TDI »), Polyphenyl-polymethylen-polyisocyanate, wie sie durch Anilin-Formaldehyd-Kondensation und anschließende Phosgenierung hergestellt werden (« rohes MDI ») und Carbodiimidgruppen, Urethangruppen, Allophanatgruppen, Isocyanuratgruppen, Harnstoffgruppen oder Biuretgruppen aufweisende Polyisocyanate (« modifizierte Polyisocyanate »), insbesondere solche modifizierten Polyisocyanate, die sich vom 2,4- und/oder 2,6-Toluylendiisocyanat ableiten.

Als Ausgangskomponente B1) ferner Verbindungen mit mindestens zwei gegenüber Isocyanaten reaktionsfähigen Wasserstoffatomen mit einem Molekulargewicht von in der Regel von 60-2 000. Hierunter versteht man neben Aminogruppen, Thiolgruppen oder Carboxylgruppen aufweisenden Verbindungen vorzugsweise Hydroxylgruppen aufweisende Verbindungen, insbesondere zwei bis acht

Hydroxylgruppen aufweisende Verbindungen, speziell solche vom Molekulargewicht 200 bis 1 000, vorzugsweise 300 bis 800, z. B. mindestens zwei, in der Regel 2 bis 8, vorzugsweise aber 2 bis 6, Hydroxylgruppen aufweisende Polyester, Polyether, Polythioether, Polyacetale, Polycarbonate und Polyesteramide, wie sie für die Herstellung von homogenen und von zellförmigen Polyurethanen an sich bekannt sind ; ganz besonders bevorzugt sind Polyetherpolyole.

a) Die in Frage kommenden Hydroxylgruppen aufweisenden Polyester sind z. B. Umsetzungsprodukte von mehrwertigen, vorzugsweise zweiwertigen und gegebenenfalls zusätzlich dreiwertigen Alkoholen mit mehrwertigen, vorzugsweise zweiwertigen, Carbonsäuren. Anstelle der freien Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z. B. durch Halogenatome, substituiert und/oder ungesättigt sein.

Als Beispiele für solche Carbonsäuren und deren Derivate seien genannt :

Bernsteinsäure, Adipinsäure, Korksäure, Azelainsäure, Sebacinsäure, Phthalsäure, Isophthalsäure, Trimellitsäure, Phthalsäureanhydrid, Tetrhydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimerisierte und trimerisierte ungesättigte Fettsäuren, gegebenenfalls in Mischung mit monomeren ungesättigten Fettsäuren, wie Ölsäure ; Terephthalsäuredimethylester und Terephthalsäure- bis-glykolester. Als mehrwertige Alkohole kommen z. B. Ethylenglykol, Propylenglykol-(1,2) und -(1,3), Butylenglykol-(1,4) und -(2,3), Hexandiol-(1,6), Octandiol-(1,8), Neopentylglykol, 1,4-Bis-hydroxymethylcyclohexan, 2-Methyl-1,3-propandiol, Glycerin, Trimethylolpropan, Hexantriol-(1,2,6), Butantriol-(1,2,4), Trimethylolethan, Pentaerythrit, Chinit, Mannit und Sorbit, Formit, Methylglykosid, ferner Diethylenglykol, Triethylenglykol, Tetraethylenglykol und höhere Polyethylenglykole, Dipropylenglykol und höhere Polypropylenglykole sowie Dibutylenglykol und höhere Polybutylenglykole in Frage. Die Polyester können anteilig endständige Carboxylgruppen aufweisen. Auch Polyester aus Lactonen, z. B. ε-Caprolacton, oder aus Hydroxycarbonsäuren, z. B. ω-Hydroxycapronsäure, sind einsetzbar.

b) Auch die erfindungsgemäß in Frage kommenden und auch bevorzugten, mindestens zwei, in der Regel zwei bis acht, vorzugsweise zwei bis sechs, Hydroxylgruppen aufweisenden Polyether sind solche der an sich bekannten Art und werden z. B. durch Polymerisation von Epoxiden wie Ethylenoxid, Propylenoxid, Butylenoxid, Tetrahydrofuran, Styroloxid oder Epichlorhydrin mit sich selbst, z. B. in Gegenwart von Lewis-Katalysatoren wie $BF_3$, oder durch Anlagerung dieser Epoxide, vorzugsweise von Ethylenoxid und Propylenoxid, gegebenenfalls im Gemisch oder nacheinander, an Startkomponenten mit reaktionsfähigen Wasserstoffatomen wie Wasser, Alkohole, Ammoniak oder Amine, z. B. Ethylenglykol, Propylenglykol-(1,3) oder -(1,2), Trimethylolpropan, Glycerin, Sorbit, Mannit, Chinit, Trimethylolethan, Pentaerythrit, Hexantriol-1,2,6, 4,4'-Dihydroxy-diphenylpropan, Anilin, Ethanolamin oder Ethylendiamin hergestellt. Auch Sucrosepolyether, wie sie z. B. in den DE-Auslegeschriften 1 176 358 und 1 064 938 beschrieben werden, sowie auf Formit oder Formose gestartete Polyether (DE-Offenlegungsschriften 2 639 083 bzw. 2 737 951), kommen erfindungsgemäß in Frage. Vielfach sind solche Polyether bevorzugt, die überwiegend (bis zu 90 Gew.-%, bezogen auf alle vorhandenen OH-Gruppen im Polyether) primäre OH-Gruppen aufweisen.

c) Auch OH-, NH- und/oder SH-Gruppen aufweisende Polybutadiene, Polythioether, Polyacetale, Hydroxylgruppen aufweisende Polycarbonate, Polyesteramide und Polyamide der an sich bekannten Art sind im erfindungsgemäßen Verfahren einsetzbar.

d) Auch bereits Urethan- oder Harnstoffgruppen enthaltende Polyhydroxylverbindungen sowie gegebenenfalls modifizierte natürliche Polyole, wie Rizinusöl oder Kohlenhydrate, z. B. Stärke, sind verwendbar. Auch Anlagerungsprodukte von Alkylenoxiden an Phenol-Formadehyd-Harze oder auch an Harnstoff-Formaldehydharze sind erfindungsgemäß einsetzbar.

e) Gegebenenfalls als Ausgangskomponenten Verbindungen mit mindestens zwei gegenüber Isocyanaten reaktionsfähigen Wasserstoffatomen und einem Molekulargewicht von 32 bis 400. Auch in diesem Fall versteht man hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf.

Auch in diesem Fall können Mischungen von verschiedenen Verbindungen mit mindestens zwei gegenüber Isocyanaten reaktionsfähigen Wasserstoffatomen mit einem Molekulargewicht von 32 bis 400 verwendet werden.

Als Beispiele für derartige Verbindungen seien genannt :

Ethylenglykol, Propylenglykol-(1,2) und -(1,3), Butylenglykol-(1,4) und -(2,3), Pentandiol-(1,5), Hexandiol-(1,6), Octandiol-(1,8), Neopentylglykol, 1,4-Bis-hydroxymethyl-cyclohexan, 2-Methyl-1,3-propandiol, Dibrombutendiol (US-Patentschrift 3 723 392), Glyzerin, Trimethylolpropan, Hexantriol-(1,2,6), Trimethylolethan, Pentaerythrit, Chinit, Mannit und Sorbit, Ricinusöl, Diethylenglykol, Triethylenglykol, Tetraethylenglykol, höhere Polyethylenglykole mit einem Molekulargewicht bis 400, Dipropylenglykol, höhere Polypropylenglykole mit einem Molekulargewicht bis 400, Dibutylenglykol, höhere Polybutylenglykole mit

einem Molekulargewicht bis 400, 4,4'-Dihydroxy-diphenylpropan, Dihydroxymethyl-hydrochinon, Dihydroxyethylhydrochinon, Dihydroxyethylresorcin.

Als niedermolekulare Polyole kommen, sofern sie Molekulargewichte unter 2 000 haben, erfindungsgemäß auch die Gemische von Hydroxyaldehyden und Hydroxyketonen (« Formose ») bzw. die hieraus durch Reduktion erhaltenen mehrwertigen Alkohole (« Formit ») in Frage, wie sie bei der Selbstkondensation von Formaldehydhydrat und von zur Endiolbildung befähigten Verbindungen als Co-Katalysator entstehen (DE-Offenlegungsschriften 2 639 084, 2 714 084, 2 714 104, 2 721 186, 2 738 154 und 2 738 512).

f) Als weitere erfindungsgemäß geeignete niedermolekulare Polyole vom Molekulargewicht bis 400 Esterdiole der allgemeinen Formeln

$$HO—(CH_2)_x—CO—O—(CH_2)_y—OH \quad \text{und}$$

$$HO—(CH_2)_x—O—CO—R—CO—O—(CH_2)_x—OH$$

in denen

R einen Alkylenrest mit 1-10, vorzugsweise 2-6, C-Atomen bzw. einen Cycloalkylen- oder Arylenrest mit 6-10 C-Atomen,

$x = 2\text{-}6$ und

$y = 3\text{-}5$

bedeuten, z. B. δ-Hydroxybutyl-ε-hydroxycapronsäureester, ω-Hydroxyhexyl-γ-hydroxybuttersäureester, Adipinsäure-bis-(β-hydroxyethyl)-ester und Terephthalsäure-bis-(β-hydroxyethyl)-ester ;

Diolurethane der allgemeinen Formel

$$HO—(CH_2)_x—O—CO—NH—R'—NH—CO—O—(CH_2)_x—OH$$

in der

R' einen Alkylenrest mit 2-15, vorzugsweise 2-6 C-Atomen oder einen Cycloalkylen- oder Arylenrest mit 6-15 C-Atomen und

x eine Zahl zwischen 2 und 6

darstellen, z. B. 1,6-Hexamethylen-bis-(β-hydroxyethylurethan) oder 4,4'-Diphenylmethan-bis-(β-hydroxybutylurethan) ;

sowie Diolharnstoffe der allgemeinen Formel

$$HO-(CH_2)_x-\underset{R'''}{N}-CO-NH-R''-NH-CO-\underset{R'''}{N}-(CH_2)_x-OH$$

in der

R'' einen Alkylenrest mit 2-15, vorzugsweise 2-9, C-Atomen oder einen Cycloalkylen- oder Arylenrest mit 6-15 C-Atomen,

R''' Wasserstoff oder eine Methylgruppe und

x die Zahlen 2 oder 3

bedeuten, z. B. 4,4'-Diphenylmethan-bis-(β-hydroxyethylharnstoff) oder die Verbindung

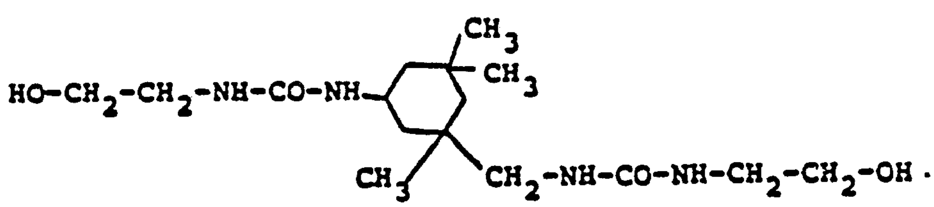

Für manche Zwecke ist es vorteilhaft, Polyole einzusetzen, welche Sulfonat- und/oder Phosphonatgruppen enthalten (DE-Offenlegungsschrift 2 719 372), vorzugsweise das Addukt von Bisulfit an Butandiol-1,4 bzw. dessen Alkoxylierungsprodukte.

Die genannten Polyhydroxylverbindungen können vor ihrer Verwendung im Polyisocyanat-Polyadditionsverfahren noch in der verschidensten Weise modifiziert werden. So läßt sich gemäß DE-Offenlegungsschriften 2 210 839 (US-Patentschrift 3 849 515) und 2 544 195 ein Gemisch aus verschiedenen Polyhydroxylverbindungen (z. B. aus einem Polyether- und einem Polyesterpolyol) durch Veretherung in Gegenwart einer starken Säure zu einem höhermolekularen Polyol kondensieren, welches aus über Etherbrücken verbundenen verschiedenen Segmenten aufgebaut ist.

Es ist auch möglich, z. B. gemäß DE-Offenlegungsschrift 2 559 372 in die Polyhydroxylverbindungen Amidgruppen oder gemäß DE-Offenlegungsschrift 2 620 487 durch Umsetzung mit polyfunktionellen

Cyansäureestern Triazingruppen einzuführen. Durch Umsetzung eines Polyols mit einer weniger als äquivalenten Menge eines Diisocyanatocarbodiimids und anschließende Reaktion der Carbodiimidgruppe mit einem Amin, Amid, Phosphit oder einer Carbonsäure erhält man Guanidin-, Phosphonoformamid bzw. Acylharnstoffgruppen aufweisende Polyhydroxylverbindungen (DE-Offenlegungsschriften 2 714 289, 2 714 292 und 2 714 293). Von besonderem Interesse ist es in manchen Fällen, die höhermolekularen Polyhydroxylverbindungen durch Reaktion mit Isatosäureanhydrid vollständig oder teilweise in die entsprechenden Anthranilsäureester überzuführen, wie es in den DE-Offenlegungsschriften 2 019 432 und 2 619 840 bzw. den US-Patentschriften 3 808 250, 3 975 428 und 4 016 143 beschrieben ist. Man erhält auf diese Weise höhermolekulare Verbindungen mit endständigen aromatischen Aminogruppen.

Um Kunststoffe mit verbesserter Flammwidrigkeit zu erhalten, setzt man diese Formosen mit Vorteil in Kombination mit Aminoplastbildnern und/oder Phosphiten ein (DE-Offenlegungsschriften 2 738 513 und 2 738 532). Auch Lösungen von Polyisocyanatpolyadditionsprodukten, insbesondere von ionische Gruppen aufweisenden Polyurethanharnstoffen und/oder von Polyhydrazodicarbonamiden, in niedermolekularen, mehrwertigen Alkoholen kommen erfindungsgemäß als Polyolkomponente in Betracht (DE-Offenlegungsschrift 2 638 759).

Erfindungsgemäß können gegebenenfalls auch Polyhydroxylverbindungen eingesetzt werden, in welchen hochmolekulare Polyaddukte bzw. Polykondensate oder Polymerisate in feindisperser oder gelöster Form enthalten sind. Derartige Polyhydroxylverbindungen werden z. B. erhalten, wenn man Polyadditionsreaktionen (z. B. Umsetzungen zwischen Polyisocyanaten und aminofunktionellen Verbindungen) bzw. Polykondensationsreaktionen (z. B. zwischen Formaldehyd und Phenolen und/oder Aminen) in situ in den oben genannten Hydroxylgruppen aufweisenden Verbindungen ablaufen läßt. Derartige Verfahren sind beispielsweise in den DE-Auslegeschriften 1 168 075 und 1 260 142, sowie den DE-Offenlegungsschriften 2 324 134, 2 423 984, 2 612 385, 2 513 815, 2 550 796, 2 550 797, 2 550 833, 2 550 862, 2 633 293 und 2 639 253 beschrieben. Es ist aber auch möglich, gemäß US-Patentschrift 3 869 413 bzw. DE-Offenlegungsschrift 2 550 860 eine fertige wäßrige Polymerdispersion mit einer Polyhydroxylverbindung zu vermischen und anschließend aus dem Gemisch das Wasser zu entfernen.

Auch durch Vinylpolymerisate modifizierte Polyhydroxylverbindungen, wie sie z. B. durch Polymerisation von Styrol und Acylnitril in Gegenwart von Polyethern (US-Patentschriften 3 383 351, 3 304 273 ; 3 523 093, 3 110 695 ; DE-Auslegeschrift 1 152 536) oder Polycarbonatpolyolen (DE-Patentschrift 1 769 795 ; US-Patentschrift 3 637 909) erhalten werden, sind für das erfindungsgemäße Verfahren geeignet. Bei Verwendung von Polyetherpolyolen, welche gemäß den DE-Offenlegungsschriften 2 442 101, 2 644 922 und 2 646 141 durch Pfropfpolymerisation mit Vinylphosphonsäureestern sowie gegebenenfalls (Meth) acrylnitril, (Meth) acrylamid oder OH-funktionellen (Meth) acrylsäureestern modifiziert wurden, erhält man Kunststoffe von besonderer Flammwidrigkeit. Polyhydroxylverbindungen, in welche durch radikalische Pfropfpolymerisation mittels ungesättigter Carbonsäuren sowie gegebenenfalls weiterer olefinisch ungesättigter Monomer Carboxylgruppen eingeführt wurden (DE-Offenlegungsschriften 2 714 291, 2 739 620 und 2 654 746), können mit besonderem Vorteil in Kombination mit mineralischen Füllstoffen eingesetzt werden.

Bei der Verwendung von modifizierten Polyhydroxylverbindungen der oben genannten Art als Ausgangskomponente im Polyisocyanat-Polyadditionsverfahren entstehen in vielen Fällen Polyurethankunststoffe mit wesentlich verbesserten mechanischen Eigenschaften.

Vertreter der genannten erfindungsgemäß zu verwendenden Verbindungen sind z. B. in ° High Polymers, Vol. XVI, « Polyurethanes, Chemistry and Technology », verfaßt von Saunders-Frisch, Interscience Publishers, New York, London, Band I, 1962, Seiten 32-42 und Seiten 44-54 und Band II, 1964, Seiten 5-6 und 198-199, sowie im Kunststoff-Handbuch, Band VII, Vieweg-Höchtlen, Carl-Hanser-Verlag, München, 1966, z. B. auf den Seiten 45-71, beschrieben. Selbstverständlich können Mischungen der obengenannten Verbindungen mit mindestens zwei gegenüber Isocyanaten reaktionsfähigen Wasserstoffatomen mit einem Molekulargewicht von 2 000-12 000, z. B. Mischungen von Polyethern und Polyestern, eingesetzt werden.

Von besonderem Vorteil ist es dabei in manchen Fällen, niedrigschmelzende und hochschmelzende Polyhydroxylverbindungen miteinander zu kombinieren (DE-Offenlegungsschrift 2 706 297).

g) Erfindungsgemäß geeignete aliphatische Polyamine, je nach Molekulargewicht zu Komponente B1) oder Komponente B2) gehörend, sind beispielsweise Ethylendiamin, 1,4-Tetramethylendiamin, 1,11-Undecamethylendiamin, 1,12-Dodecamethylendiamin sowie deren Gemische, 1-Amino-3,3,5-trimethyl-5-amino-methyl-cyclohexan (« Isophorondiamin »), 2,4- und 2,6-Hexahydrotoluylendiamin sowie deren Gemische, Perhydro-2,4'- und 4,4'-diaminodiphenylmethan, p-Xylylendiamin, Bis-(3-aminopropyl)-methylamin, Diamino-perhydroanthrazene (DE-Offenlegungsschrift 2 638 731) und cycloaliphatische Triamine gemäß DE-Offenlegungsschrift 2 614 244. Auch Hydrazin und substituierte Hydrazine, z. B. Methylhydrazin, N,N'-Dimethylhydrazin und deren Homologe sowie Säuredihydrazide kommen erfindungsgemäß in Betracht, z. B. Carbodihydrazid, Oxalsäuredihydrazid, die Dihydrazide von Malonsäure, Bernsteinsäure, Glutarsäure, Adipinsäure, β-Methyladipinsäure, Sebazinsäure, Hydracrylsäure und Terephthalsäure, Semicarbazidoalkylen-hydrazide wie z. B. β-Semicarbazido-propionsäurehydrazid (DE-Offenlegungsschrift 1 770 591), Semicarbazido-alkylencarbazinester wie z. B. 2-Semicarbazidoethyl-carbazinester (DE-Offenlegungsschrift 1 918 504) oder auch Amino-semicarbazid-Verbindungen wie z. B. β-Aminoethyl-semicarbazido-carbonat (DE-A 1 902 931). Zur Steuerung ihrer Reaktivität können die Aminogruppen ganz oder

teilweise durch Aldimin- bzw. Ketimin-Gruppen blockiert sein (US-Patentschrift 3 734 894 ; DE-Offenlegungsschrift 2 637 115).

Durch Umsetzung von NCO-Prepolymeren mit Hydroxylgruppen aufweisenden Enaminen, Aldiminen oder Ketiminen und anschließende Hydrolyse erhält man gemäß DE-Offenlegungsschrift 2 546 536 bzw. US-Patentschrift 3 865 791 höhermolekulare, endständige Aminogruppen aufweisende Verbindungen. Weitere Herstellungsverfahren für höhermolekulare Verbindungen mit endständigen Aminogruppen oder Hydrazingruppen werden in der DE-Offenlegungsschrift 1 694 152 (US-PS 3 625 871) beschrieben.

In diesen Verbindungen können die die Aminogruppen tragenden, endständigen Reste mit der Polyetherkette auch über Urethan- oder Estergruppen verknüpft sein. Die Herstellung dieser « Aminopolyether » erfolgt in an sich bekannter Weise. So kann beispielsweise eine Aminierung von Polyhydroxypolyethern wie z. B. Polypropylenglykolethern durch Reaktion mit Ammoniak in Gegenwart von Raney-Nickel und Wasserstoff durchgeführt werden (BE-PS 634 741). US-PS 3 654 370 beschreibt die Herstellung von Polyoxyalkylenpolyaminen durch Umsetzung des entsprechenden Polyols mit Ammoniak und Wasserstoff in Gegenwart eines Nickel-, Kupfer-, Chrom-Katalysators. In der DE-PS 1 193 671 wird die Herstellung von cyanethylierten Polyoxypropylenethern beschrieben. Weitere Methoden zur Herstellung von Polyoxyalkylen-(Polyether)-aminen sind in US-PS 3 155 728, US-PS 3 236 895 und FR-PS 1 551 605 beschrieben. In der FR-PS 1 466 708 wird beispielsweise die Herstellung von sekundäre Amino-Endgruppen aufweisenden Polyethern beschrieben.

Höhermolekulare Polyhydroxylpolyether können durch Reaktion mit Isatosäureanhydrid in die entsprechenden, erfindungsgemäß als Komponente b) geeigneten Anthranilsäureester überführt werden, wie dies beispielsweise in DE-OS 2 019 432, DE-OS 2 619 840, US-PS 3 808 250, US-PS 3 975 428 oder US-PS 4 016 143 beschrieben ist. Auf diese Weise entstehen Polyether mit endständigen aromatischen Aminogruppen.

Ebenfalls einsetzbar sind andere Amino-Polyether des obengenannten Molekulargewichtsbereichs, wie sie beispielsweise gemäß DE-OS 2 948 419, DE-OS 3 039 600 oder gemäß EP 71 834 erhalten werden können.

Als Beispiele für aromatische Diamine seien Bisanthranilsäureester gemäß den DE-Offenlegungsschriften 2 040 644 und 2 160 590, 3,5- und 2,4-Diaminobenzoesäureester gemäß DE-Offenlegungsschrift 2 025 900, die in den DE-Offenlegungsschriften 1 803 635 (IS-Patentschriften 3 681 290 und 3 736 350), 2 040 650 und 2 160 589 beschriebenen estergruppenhaltigen Diamine, die Ethergruppen aufweisenden Diamine gemäß DE-Offenlegungsschriften 1 770 525 und 1 809 172 (US-Patentschriften 3 654 364 und 3 736 295), gegebenenfalls in 5-Stellung substituierte 2-Halogen-1,3-Phenylendiamine (DE-Offenlegungsschriften 2 001 772, 2 025 896 und 2 065 869), 3,3'-Dichlor-4,4'-diamino-diphenylmethan, Toluylendiamin, 4,4'-Diaminodiphenylmethan, 4,4'-Diaminodiphenyldisulfide (DE-Offenlegungsschrift 2 404 976), Diaminodiphenyldithioether (DE-Offenlegungsschrift 2 509 404), durch Alkylthiogruppen substituierte aromatische Diamine (DE-Offenlegungsschrift 2 638 760), Diaminobenzolphosphorsäureester (DE-Offenlegungsschrift 2 720 166) sowie die in der DE-Offenlegungsschrift 2 635 400 aufgeführten hochschmelzenden Diamine genannt. Beispiele für aliphatisch-aromatische Diamine sind die Aminoalkylthioaniline gemäß DE-Offenlegungsschrift 2 734 574.

Als Kettenverlängerungsmittel können erfindungsgemäß auch Verbindungen wie 1-Mercapto-3-aminopropan, gegebenenfalls substituierte Aminosäuren, z. B. Glycin, Alanin, Valin, Serin und Lysin sowie gegebenenfalls substituierte Dicarbonsäuren, beispielsweise Bernsteinsäure, Adipinsäure, Phthalsäure, 4-Hydroxyphthalsäure und 4-Aminophthalsäure verwendet werden.

Zu Komponente B2) gehörig sind a) Hydroxylgruppen aufweisende Polyester aus den gleichen Carbonsäuren und Polyolen, wie sie oben aufgeführt wurden, sofern sie Molekulargewichte über 2 000 haben, b) Polyetherpolyole aus den oben bezeichneten Bausteinen, sofern sie Molekulargewichte über 2 000 haben, c) OH-, NH- und/oder SH-Gruppen aufweisende Polybutadiene, Polythioether, Polyacetale, Polycarbonate, Polyesteramide und Polyamide der bekannten Art, sofern sie Molekulargewichte über 2 000 haben, sowie die unter B1)d), B1)e), B1)f) und B1)g) aufgeführten Verbindungstypen, sofern sie Molekulargewichte über 2 000 haben.

Gegebenenfalls als Hilfs- und Zusatzmittel (B4) :

a) Wasser und/oder leicht flüchtige anorganische oder organische Substanzen als Treibmittel. Als organische Treibmittel kommen z. B. Aceton, Ethylacetat, halogensubstituierte Alkane wie Methylenchlorid, Chloroform, Ethylidenchlorid, Vinylidenchlorid, Monofluortrichlormethan, Chlordifluormethan, Dichlordifluormethan, ferner Butan, Hexan, Heptan oder Diethylether, als anorganische Treibmittel z. B. Luft, $CO_2$ oder $N_2O$, in Frage. Eine Treibwirkung kann auch durch Zusatz von bei Temperaturen über Raumtemperatur unter Abspaltung von Gasen, beispielsweise von Stickstoff, sich zersetzenden Verbindungen, z. B. Azoverbindungen wie Azodicarbonamid oder Azoisobuttersäurenitril, erzielt werden.

Weitere Beispiele für Treibmittel sowie Einzelheiten über die Verwendung von Treibmitteln sind im Kunststoff-Handbuch, Band VII, herausgegeben von Vieweg und Höchtlen, Carl-Hanser-Verlag, München 1966, z. B. auf den Seiten 108 und 109, 453 bis 455 und 507 bis 510 beschrieben.

b) Katalysatoren der an sich bekannten Art, z. B. tertiäre Amine, wie Triethylamin, Tributylamin, N-Methylmorpholin, N-Ethylmorpholin, N,N,N',N'-Tetramethyl-ethylendiamin, Pentamethyl-diethylentriamin und höhere Homologe (DE-Offenlegungsschrift 2 624 527 und 2 624 528), 1,4-Diazabicyclo-(2,2,2)-octan, N-Methyl-N'-dimethylaminoethylpiperazin, Bis-(dimethylaminoalkyl)-piperazine (DE-Offenlegungsschrift

2 636 787), N,N-Dimethylbenzylamin, N,N-Dimethylcyclohexylamin, N,N-Diethylbenzylamin, Bis-(N,N-diethylaminoethyl)-adipat, N,N,N',N'-Tetramethyl-1,3-butandiamin, N,N-Dimethyl-β-phenylethylamin, 1,2-Dimethylimidazol, 2-Methylimidazol, monocyclische und bicyclische Amidine (DE-Offenlegungsschrift 1 720 633), Bis-(dialkylamino)-alkylether (US-Patentschrift 3 330 782, DE-Auslegeschrift 1 030 558, DE-Offenlegungsschriften 1 804 361 und 2 618 280) sowie Amidgruppen (vorzugsweise Formamidgruppen) aufweisende tertiäre Amine gemäß den DE-Offenlegungsschriften 2 523 633 und 2 732 292). Als Katalysatoren kommen auch an sich bekannte Mannichbasen aus sekundären Aminen, wie Dimethylamin, und Aldehyden, vorzugsweise Formaldehyd, oder Ketonen wie Aceton, Methylethylketon oder Cyclohexanon und Phenolen, wie Phenol, Nonylphenol oder Bisphenol, in Frage.

Gegenüber Isocyanatgruppen aktive Wasserstoffatome aufweisende tertiäre Amine als Katalysatoren sind z. B. Triethanolamin, Triisopropanolamin, N-Methyldiethanolamin, N-Ethyldiethanolamin, N,N-Dimethylethanolamin, deren Umsetzungsprodukte mit Alkylenoxiden wie Propylenoxid und/oder Ethylenoxid sowie sekundär-tertiäre Amine gemäß DE-Offenlegungsschrift 2 732 292.

Als Katalysatoren kommen ferner Silaamine mit Kohlenstoff-Silizium-Bindungen, wie sie z. B. in der DE-Patentschrift 1 229 290 (entsprechend der US-Patentschrift 3 620 984) beschrieben sind, in Frage, z. B. 2,2,4-Trimethyl-2-silamorpholin und 1,3-Diethylaminomethyl-tetramethyl-disiloxan.

Als Katalysatoren kommen auch stickstoffhaltige Basen wie Tetraalkylammoniumhydroxide, ferner Alkalihydroxide wie Natriumhydroxid, Alkaliphenolate wie Natriumphenolat oder Alkalialkoholate wie Natriummethylat in Betracht. Auch Hexahydrotriazine können als Katalysatoren eingesetzt werden (DE-Offenlegungsschrift 1 769 043).

Die Reaktion zwischen NCO-Gruppen und Zerewitinoffaktiven Wasserstoffatomen wird auch durch Lactame und Azalactame stark beschleunigt, wobei sich zunächst ein Assoziat zwischen dem Lactam und der Verbindung mit acidem Wasserstoff ausbildet. Derartige Assoziate und ihre katalytische Wirkung werden in der DE-Offenlegungsschriften 2 062 288, 2 062 289, 2 117 576 (US-Patentschrift 3 758 444), 2 129 198, 2 330 175 und 2 330 211 beschrieben.

Erfindungsgemäß können auch organische Metallverbindungen, insbesondere organische Zinnverbindungen als Katalysatoren, verwendet werden. Als organische Zinnverbindungen kommen neben schwefelhaltigen Verbindungen wie Di-n-octyl-zinn-mercaptid (DE-Auslegeschrift 1 769 367; US-Patentschrift 3 645 927) vorzugsweise Zinn(II)-salze von Carbonsäuren wie Zinn(II)-acetat, Zinn(II)-octoat, Zinn(II)-ethylhexoat und Zinn(II)-laurat und die Zinn(IV)-Verbindungen, z. B. Dibutylzinnoxid, Dibutylzinndichlorid, Dibutylzinndiacetat, Dibutylzinndilaurat, Dibutylzinnmaleat oder Dioctylzinndiacetat in Betracht.

Selbstverständlich können alle obengenannten Katalysatoren als Gemische eingesetzt werden. Von besonderem Interesse sind dabei Kombinationen aus organischen Metallverbindungen und Amidinen, Aminopyridinen oder Hydrazinopyridinen (DE-Offenlegungsschriften 2 434 185, 2 601 082 und 2 603 834).

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München 1966, z. B. auf den Seiten 96 bis 102 beschrieben.

Die Katalysatoren werden in der Regel in einer Menge zwischen 0,001 und 10 Gew.-%, bezogen auf die Gesamtmenge an Verbindungen mit mindestens zwei gegenüber Isocyanaten reaktionsfähigen Wasserstoffatomen, eingesetzt.

c) Oberflächenaktive Zusatzstoffe, wie Emulgatoren und Schaumstabilisatoren. Als Emulgatoren kommen z. B. die Natriumsalze von Ricinusöl-sulfonaten oder Salze von Fettsäuren mit Aminen wie ölsaures Diethylamin oder stearinsaures Diethanolamin in Frage. Auch Alkali- oder Ammoniumsalze von Sulfonsäuren wie etwa von Dodecylbenzolsulfonsäure oder Dinaphtylmethandisulfonsäure oder von Fettsäuren wie Ricinolsäure oder von polymeren Fettsäuren können als oberflächenaktive Zusatzstoffe mitverwendet werden.

Als Schaumstabilisatoren kommen vor allem Polyethersiloxane, speziell wasserlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Derartige Schaumstabilisatoren sind z. B. in den US-Patentschriften 2 834 748, 2 917 480 und 3 629 308 beschrieben. Von besonderem Interesse sind vielfach über Allophanatgruppen verzweigte Polysiloxan-Polyoxyalkylen-Copolymere gemäß DE-Offenlegungsschrift 2 558 523.

d) Reaktionsverzögerer, z. B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe und Flammschutzmittel der an sich bekannten Art, z. B. Trischlorethylphosphat, Trikresylphosphat oder Ammoniumphosphat und -polyphosphat, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgel, Ruß oder Schlämmkreide.

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z. B. auf den Seiten 103 bis 113 beschrieben.

Ferner können gegenüber Isocyanaten monofunktionelle Verbindungen in Anteilen von 0,01 bis 10 Gew.-% bezogen auf Polyurethanfeststoff, als sogenannte Kettenabbrecher mitverwendet werden. Derartige monofunktionelle Verbindungen sind z. B. Monoamine wie Butyl- und Dibutylamin, Octylamin, Stearylamin, N-Methylstearylamin, Pyrrolidin, Piperidin und Cyclohexylamin, Monoalkohole wie Butanol, 2-Ethylhexanol, Octanol, Dodecanol, die verschiedenen Amylalkohole, Cyclohexanol, Ethylenglykolmonoethylether.

Durchführung des erfindungsgemäßen Verfahrens :

Die Reaktionskomponenten werden erfindungsgemäß nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der US-Patentschrift 2 764 565 beschrieben werden. Einzelheiten über Verarbeitungseinrichtungen, die auch erfindungsgemäß in Frage kommen, werden im Kunststoff-Handbuch, Band VII, herausgegeben von Vieweg und Höchtlen, Carl-Hanser-Verlag, München 1966, z. B. auf den Seiten 121 bis 205 beschrieben.

Erfindungsgemäß lassen sich auch kalthärtende Schaumstoffe herstellen (vgl. GB-Patentschrift 1 162 517, DE-Offenlegungsschrift 2 153 086).

Selbstverständlich können aber auch Schaumstoffe durch Blockverschäumung oder nach dem an sich bekannten Doppeltransbandverfahren hergestellt werden.

Erfindungsgemäß bevorzugt ist die Schaumstoffherstellung nach dem Vorschäumverfahren (« frothing process » ; vergl. z. B. Kunststoff-Handbuch Band VII, herausgegeben von Vieweg und Höchtlen, Carl-Hanser-Verlag, München 1966, S. 455, 456, 509, 534).

Die erfindungsgemäß herstellbaren Polyurethanschäume sind weich, halbhart und bevorzugt hart. Sie dienen z. B. zur Kühlmöbelisierung, ferner zur Erstellung von Sprühisolierungen, Überschichtungen und als Einkomponentenschaum.

## Beispiele

### Beispiel 1

Vergleichsbeispiel zu DE-OS 2 200 480, Bsp. 5 (S. 17)

In diesem Beispiel wurde $CO_2$ durch eine 20 Gew.-/Vol.-%ige Lösung von Ethanolamin in Tetrachlorkohlenstoff geleitet.

Es wurde versucht, diesen Versuch nachzuarbeiten. Dabei wurde festgestellt, daß bei Temperaturen von 20-35 °C sich Ethanolamin weder zu 20 Gew.-%, noch 10 Gew.-%, noch 5 Gew.-% in Tetrachlorkohlenstoff löst (20, 10 und 5 Tle. Ethanolamin und 80, 90 und 95 Tle. Tetrachlormethan), so daß dieser Versuch nicht reproduziert werden konnte.

### Beispiel 2

Vergleichsbeispiel zu DE-PS 2 621 582, Bsp. 3 (S. 10)

In diesem Beispiel wird behauptet, daß durch Einleiten von Kohlendioxyd in eine Lösung von Diethanolamin in Benzol weißes, pulverförmiges Diethanolamincarbamat erhalten wird.

Es wurde versucht, diesen Versuch nachzuarbeiten. Dabei wurde festgestellt, daß Diethanolamin mit Benzol (und auch Toluol) in einem weiten Konzentrationsbereich überhaupt nicht mischbar ist.

### Beispiel 3

a) Gemäß GB-A 1 103 506, Bsp. 9 (S. 5, 6)

In diesem Beispiel wird durch Einleiten von Kohlendioxyd in eine Lösung von Hydroxyethylhydrazin in DMF ein Salz ausgefällt.

b) Erfindungsgemäß

Wiederholt man diesen Versuch ohne Lösungsmittel, d. h. leitet man in Hydrazinoethanol Kohlendioxyd ein und sorgt durch externes Kühlen dafür, daß die Innentemperatur nicht über 80 °C steigt, so werden auf 100 g Hydrazinoethanol 9,2 l $CO_2$ (0,41 mol) aufgenommen ; das helle, klare Produkt ist entgegen den Ausgaben in GB-A 1 103 506 flüssig und kristallisiert auch nach längerer Lagerzeit nicht.

Auch das unter Mitverwendung von Wasser hergestellte Kohlensäuresalz ist flüssig und kristallisiert nicht (Bsp. 6, 4).

### Beispiel 4

In diesem Beispiel wird gezeigt, welchen Einfluß die Reaktionstemperatur auf die Kohlendioxyd-Adduktbildung nimmt :

4.1. In 122 g Ethanolamin (2 mol) wurde $CO_2$ eingeleitet. Durch äußere Kühlung und Dosierung der Einleitungsgeschwindigkeit wurde die Innentemperatur auf 20 °C gehalten.

4.2. 122 g Ethanolamin (2 mol) wurden auf 80 °C erhitzt und $CO_2$ eingeleitet. Durch Kühlen und

gegen Ende der Reaktion durch Erwärmen wurde die Reaktionstemperatur auf 80 °C gehalten.

4.3. 122 g 20 °C warmes Ethanolamin (2 mol) wurden bis zur Sättigung mit Kohlendioxyd begast. Dabei stieg die Temperatur bis auf 120 °C, ohne daß gekühlt wurde.

4.4. 122 g Ethanolamin (2 mol) wurden auf 140 °C erhitzt und mit $CO_2$ begast. Bis zur Sättigung wurde das 140 °C heiße Bad nicht entfernt.

Während der Reaktion stieg die Innentemperatur auf 160 °C an. Das Produkt ist deutlich gelb im Vergleich zu den helleren Produkten aus 4.1-4.3.

Bei allen 4 Ansätzen entstehen klare, mittelviskose, nichtkristallisierende Flüssigkeiten.

Die gemessenen Gasmengen sind praktisch gleich :

| | Vol. 1 (l) | Vol. 2 (l) |
|---|---|---|
| 4.1. | 19,8 | 21,3 |
| 4.2. | 21,4 | 23 |
| 4.3. | 18,9 | 20,4 |
| 4.4. | 17,8 | 20,0 |
| | ø 19,5 l | ø 21,1 l |

Dabei ist Vol. 1 die Stickstoffmenge, die man erhält, wenn man die über eine Gasmeßuhr ermittelten und die durch Auswiegen des Reaktionsansatzes nach der $CO_2$-Begasung erhaltenen $CO_2$-Mengen mittelt. Vol. 2 ist die durch volumetrische Bestimmung erhaltene Gasmenge nach Versetzen des Produktes mit überschüssiger verdünnter Salzsäure.

Man sieht, daß die Kohlendioxyd-Aufnahme weitgehend unabhängig von der Reaktionstemperatur ist, es wird innerhalb der Fehlergrenze immer gleich viel $CO_2$ aufgenommen (annähernd 1 mol $CO_2$ auf 2 mol Aminoalkohol).

4.5. Innerhalb 7 h wurde bei einer von 20 °C auf 85 °C ansteigenden Innentemperatur 3 183 l (ca. 6,35 kg) Kohlendioxyd in vorgelegte 21,6 kg Ethanolamin eingeleitet. Durch Kühlung wurde verhindert, daß die Innentemperatur über 85 °C stieg. Das helle, flüssige Material kristallisiert selbst nach 1 Jahr nicht.

## Beispiel 5

In diesem Beispiel werden die Lagerstabilitäten der Kohlensäureaddukte von Ethanolamin untersucht.

5.1. Die in Beispiel 4 hergestellten Addukte und zwei analog zu 4.1 und 4.2 in Gegenwart von Wasser hergestellte Addukte (122 g Ethanolamin und 36 g Wasser) wurden 2 h auf 80 °C erhitzt. Dabei konnte gravimetrisch und volumetrisch keinerlei Gasentwicklung beobachtet werden.

5.2. Die in Beispiel 4 hergestellten Addukte und zwei analog zu 4.1 und 4.2 in Gegenwart vom Wasser hergestellte Addukte [aus 122 g Ethanolamin (2 mol) und 36 g Wasser (2 mol) und $CO_2$ bis zur Sättigung] wurden 30 min bei 20 mbar Druck auf 60 °C erhitzt und dann durch Auswiegen und acidolytische Zersetzung mit $CO_2$-Messung ein etwaiger Gasverlust untersucht.

In allen 6 Proben war keinerlei Gasverlust feststellbar.

## Beispiel 6

In Beispiel 6 werden weitere, verschiedene flüssige Kohlendioxyd-Addukte hergestellt.

6.1. 800 g 98 %iges Ethanolamin (12,8 mol) und 120 g Wasser (16,67 mol) werden vereinigt und diese Mischung innerhalb einer Stunde 138 l $CO_2$ (6,16 mol) eingeleitet. Während der exothermen Reaktion erwärmt sich die Mischung auf 85 °C. Durch Kühlung wurde dafür gesorgt, daß diese Temperatur nicht überstiegen wurde.

In einem anderen Ansatz wurden bei gleicher Ansatzgröße 144 l $CO_2$ (6,43 mol) aufgenommen.

Das Produkt ist klar, flüssig, gibt kein Kohlendioxyd ab. Die Stabilität beträgt mind. ein Jahr.

6.2.1. In eine Mischung aus Diethanolamin (900 g = 8,57 mol) und 80 g Wasser (4,44 mol) wurde Kohlendioxyd bis zur Sättigung eingeleitet. Innerhalb 75 min. wurden 73 l $CO_2$ (3,26 mol), in einen anderen Ansatz 72 l (3,21 mol) eingeleitet. Während der Reaktion stieg die Innentemperatur auf 63 °C, ohne daß gekühlt wurde.

6.2.2. In 1 000 g Diethanolamin (9,52 mol) wurden bei von 25 °C auf 70 °C ansteigender Innentemperatur 78 l $CO_2$ (3,48 mol) (Sättigung) eingeleitet.

Das klar-flüssige Produkt ist ohne Kristallisationstendenzen und Gasabspaltung mind. ein Jahr stabil.

6.3.1. In eine Mischung aus 1 400 g N-β-Hydroxyethyl-ethylendiamin und 242 g Wasser (je 13,46 mol) wurden innerhalb 150 min 238 l Kohlendioxyd (10,63 mol) eingeleitet (Sättigungsgrenze). Die Innentemperatur stieg bis auf 80 °C.

6.3.2. In eine Mischung aus 400 g N-β-Hydroxyethyl-ethylendiamin (3,85 mol) und 88 ml Wasser (4,89 mol) wurde unter Eiskühlung, so daß die Innentemperatur nicht über 25 °C stieg, $CO_2$ bis zur

Sättigung eingeleitet. Es wurden 130 l $CO_2$ (5,8 mol) aufgenommen.

6.3.3. In vorgelegte 1 000 g N-Hydroxyethyl-ethylendiamin wurde bei von 25 °C auf 70 °C ansteigender Innentemperatur Kohlendioxyd bis zur Sättigung eingeleitet. Dabei wurden 119 l $CO_2$ (5,3 mol) aufgenommen.

Die klar-flüssigen Produkte sind ohne Kristallisationstendenzen und ohne Gasabspaltung mind. ein Jahr stabil.

6.4. In eine Mischung aus 500 g Hydrazinoethanol (6,58 mol) und 59 g Wasser (3,29 mol) wird Kohlendioxyd bis zur Sättigung eingeleitet. Dabei werden bei bis auf 83 °C ansteigender Temperatur 49,5 l Kohlendioxyd (2,2 mol) aufgenommen.

Das klar-flüssige Produkt ist ohne Kristallisationstendenzen und ohne Gasabspaltung mind. ein Jahr stabil.

6.5. Isopropanolamin-Kohlendioxyd-Addukte.

6.5.1. In 500 g Isopropanolamin wurde innerhalb 2 h 55 l Kohlendioxyd (2,46 mol) eingeleitet. Dabei stieg die Temperatur auf 62 °C.

Das klare, höherviskose Produkt ist ohne Kristallisationstendenzen und ohne Gasabspaltung mind. ein Jahr stabil.

6.5.2. In eine Mischung aus Isopropanolamin (500 g = 6,67 mol) und 120 g Wasser (6,67 mol) wird bis zur Sättigung Kohlendioxyd eingeleitet. Es werden 99,2 l $CO_2$ (4,4 mol) aufgenommen.

6.6. In eine Mischung aus 305,5 g N-Methyldiethanolamin (2,28 mol) und 47 g Wasser (1,68 mol) wurde unter Eiskühlung Kohlendioxyd eingeleitet. Nach 3 d waren bei dieser Temperatur 33,7 g $CO_2$ (0,74 mol) aufgenommen.

Das klare, flüssige Produkt ist mind. 3 Jahre stabil, kristallisiert nicht und spaltet kein Gas ab.

## Anwendungsbeispiele

Eingesetzte Polyole :

Polyol (A) : Durch Propoxylierung eines Gemisches von Rohrzucker (87,4 % der OH-Äquivalente), Wasser (6,2 %) und Propylenglykol (6,4 %) erhaltenes Polyetherpolyol mit einer OH-Zahl von ca. 380, einer Funktionalität von 5,8 und einer Viskosität von 12 000 mPas bei 25 °C.

Polyol (B) : Durch Propoxylierung eines Gemisches von Rohrzucker (45 %), Wasser (2 %) und Propylenglykol (53 %) erhaltenes Polyetherpolyol mit einer OH-Zahl von ca. 380, einer Funktionalität von 3 und einer Viskosität von 600 mPas bei 25 °C.

Polyol (C) : Durch Ethoxylierung von Ethyldiethanolamin erhaltenes Polyetherpolyol mit einer OH-Zahl von ca. 470, einer Funktionalität von 2 und einer Viskosität von 85 mPas bei 25 °C.

Polyol (D) : Durch Propoxylierung eines Gemisches von Rohrzucker (82,8 %), Wasser (3,1 %) und Propylenglykol (14,1 %) erhaltenes Polyetherpolyol mit einer OH-Zahl von ca. 470, einer Funktionalität von 5,3 und einer Viskosität von ca. 34 000 mPas bei 25 °C.

Polyol (E) : Durch Propoxylierung eines Gemisches von Rohrzucker (45 %) und Propylenglykol (55 %) erhaltenes Polyetherpolyol mit einer OH-Zahl von ca. 380, einer Funktionalität von 3 und einer Viskosität von 1 500 mPas bei 25 °C.

Polyol (F) : Durch Propoxylierung von Glyzerin erhaltenes Polyetherpolyol mit einer OH-Zahl von ca. 455, einer Funktionalität von 3 und einer Viskosität von 400 mPas bei 25 °C.

Polyol (G) : Durch Propoxylierung von Ethylendiamin erhaltenes Polyetherpolyol mit einer OH-Zahl von ca. 650, einer Funktionalität von 4 und einer Viskosität von ca. 20 000 mPas bei 25 °C.

Polyol (H) : Durch blockweise Addition von Propylenoxid und Ethylenoxid an Trimethylolpropan hergestelltes Polyetherpolyol mit einer OH-Zahl von 35 durch einer Funktionalität von 3.

Polyol (I) : Durch Propoxylierung von Triethanolamin erhaltenes Polyetherpolyol mit einer OH-Zahl von ca. 500 und einer Funktionalität von 3.

## Beispiel 7

Verwendung der Kohlendioxyd-Addukte im Hartschaum.

7.1. Rezeptur :

60 Tle. Polyol D

23,6 Tle. Polyol B

16,4 Tle. Polyol E

2,1 Tle Wasser

1,9 Tle Zell-Stabilisator (80 %ige Lösung eines Polyethersiloxans in einem Polypropylenglykol der OH-Zahl 500)

3,3 Tle. Amin-Katalysator 1 (Desmorapid ® Vers.-Pr. PU 3144 der BAYER AG)

x Tle. Addukt

x Tle. Amin-Katalysator 2 (Desmorapid ® 726 b der BAYER AG)

100 Tle der Polyolformulierung (OH-Zahl ca. 430) werden mit verschiedenen Mengen verschiedener Addukte versetzt und mit verschiedenen Mengen des Amin-Katalysators 2 nachaktiviert.

| Tle. | Addukt (aus Beispiel) | Tle. Amin-Katalysator 2 | Startzeit (sec.) | Abbindezeit (sec.) |
|---|---|---|---|---|
| 0 | | | 23 | 104 |
| 1 | 4.5. | 1,1 | 15 | 104 |
| 2 | 4.5. | 0,9 | 7 | 107 |
| 3 | 4.5. | 0,9 | 4 | 105 |
| 4 | 4.5. | 0,8 | 3 | 100 |
| 3 | 6.2.2. | 0,5 | 11 | 106 |
| 3 | 6.3.3. | 1,8 | 18 | 105 |
| 3 | 6.5. | 1,1 | 4 | 104 |

Die mit Addukt und Katalysator versetzten Polyolgemische wurden unter intensivem Rühren mit 40 Tlen. Trichlorfluormethan vermischt. Bei Einhaltung einer Kennzahl von 105 wurde dieses Gemisch mit 150 Tle. eines Isocyanats verschäumt, das ein rohes Phosgenierungsprodukt eines Anilin/Formaldehyd-Kondensats darstellt, von dem soviel Diisocyanatodiphenylmethan abdestilliert wurde, daß der Rückstand bei 25 °C eine Viskosität von 200 mPas und einen 2-Kernanteil von 44,3 %, einen 3-Kernanteil von 23,5 % und einem Anteil an höherkernigen Polyisocyanaten von 32,2 % aufweist. Der NCO-Gehalt beträgt ca. 31 Gew.% NCO.

7.2. Wiederholt man den Ansatz von 7.1 mit der Maßgabe, daß anstelle der Addukte aus den Beispielen 4.5, 6.3.3, 6.5 und 6.2.2 die entsprechenden in Gegenwart von Wasser hergestellten Addukte aus den Beispielen 6.1, 6.2.1, 6.5.2 und 6.3.2. Verwendung finden, so findet man gleiches Schäumverhalten. Dies gilt gleichermaßen, ob der Wassergehalt der Addukte bei der Rezeptur berücksichtigt wird oder nicht. Bezüglich der kinetischen Verschäumungsdaten und Aussehen, Verhalten etc. des Schaums ist kein Unterschied festzustellen.

## Beispiel 8

Ethanolamin-Kohlendioxyd-Addukte im Hartschaum.

8.1. Rezeptur:

80 Tle. Polyol A
12 Tle. Polyol B
8 Tle. Polyol C
0,5 Tle. Dimethylethanolamin
2,1 Tle. Wasser
1,5 Tle. Stabilisator (wie bei 7.1).

100 Tle. der Polyolformulierung (OH-Zahl ca. 380) wurden mit verschiedenen Mengen Ethanolamin-Addukten (aus 4.5) versetzt und mit Amin-Katalysator 2 gemäß Beispiel 7 nachaktiviert. Nach Zugabe von 38 Tlen. Trichlormonofluormethan erfolgt Umsetzung mit 130 Tlen. des Isocyanats aus Beispiel 7.1.

Alle Vermischungen erfolgen mit einem Laborrührer bei 1 000 U/min.

| Tle. Addukt | Tle. Amin-Katalysator 2 | Startzeit (sec.) | Abbindezeit (sec.) |
|---|---|---|---|
| 0 | 1,5 | 16 | 85 |
| 1 | 1,2 | 10 | 84 |
| 2 | 1,0 | 5 | 83 |
| 3 | 0,8 | 4 | 87 |
| 4 | 0,7 | 3 | 88 |
| 5 | 0,7 | 2 | 82 |

Aufgrund des Anschäumeffekts lassen sich Rezepturen, die mehr als 2 Tle. an Ethanolamin-Addukt enthalten, nur schwer im Labor verarbeiten. Verschäumt man 3 und mehr Tle. Ethanolamin-Addukt enthaltende Polyolgemische auf einer Hochdruckmaschine (HK 100 der Maschinenfabriken Hennecke, St. Augustin, BRD, mit einem Nadeldüsenmischkopf), so tritt das Reaktionsgemisch bereits angeschäumt aus dem Auslaufrohr und zeigt ein Schäumverhalten, wie es sonst nur unter Zusatz von ca. 5-8 Tlen. Dichlordifluormethan oder ähnlicher Treibmittel beobachtet werden kann.

8.2. Wiederholt man den Ansatz von 8.1 mit Ethanolamin-Addukt aus Beispiel 4.5 und variiert die Mengenverhältnisse in der gleichen Weise, zeigt sich kein Unterschied zwischen den beiden Addukten. Dies gilt gleichermaßen, ob der Wassergehalt des Addukts von Beispiel 4.5 bei der Rezeptur berücksichtigt wird oder nicht.

## Beispiel 9

Weiteres Beispiel zur Verwendung der Addukte im Hartschaum.

9.1. Rezeptur:
60 Tle. Polyol D
30 Tle. Polyol F
10 Tle. Polyol G
2 Tle. Wasser
2 Tle. eines Siloxanpolyethercopolymers mit η 700 mPas bei 25 °C
0,5 Tle. Amin-Katalysator 3 (Desmorapid® PV der BAYER AG)

100 Tle. Polyolformulierung wurden mit 3 Tln. Ethanolamin-Addukt aus 4.5, Diethanolamin-Addukt aus 6.2.1 sowie Isopropanolamin-Addukt aus 6.5.2 vermischt und mit dem Amin-Katalysator 2 nachaktiviert. Nach Zugabe von 35 Tlen. Trichlorfluormethan erfolgte die Umsetzung mit 148 Tln. des Polyisocyanates aus Beispiel 7.1.

| | Tle. Amin-Katalys. 2 | Startz. (sec.) | Abbindez. (sec.) |
|---|---|---|---|
| 3 Tle. Ethanolamin-Addukt (aus 4.5.) | 3 | 4 | 76 |
| 3 Tle. Diethanolamin-Addukt (aus 6.2.2.) | 3 | 7 | 76 |
| 3 Tle. Isopropanolamin-Addukt (aus 6.5.1.) | 3 | 4 | 82 |
| | 0 | 12 | 75 |

9.2. Wiederholt man den Ansatz von 9.1 mit der Maßgabe, daß anstelle der Addukte aus den Beispielen 4.5, 6.2.2 und 6.5.1 die entsprechenden Addukte aus den Beispielen 6.1, 6.2.1 und 6.5.2 verwendet werden, so findet man gleiches Schaumverhalten. Dies gilt gleichermaßen, ob der Wassergehalt der Addukte bei der Rezeptur berücksichtigt wird oder nicht. Bezüglich der kinetischen Verschäumungsdaten und Aussehen, Verhalten, Eigenschaften etc. des Schaums ist kein Unterschied festzustellen.

In den Beispielen 7.1-9.2 wird gezeigt, daß mit bzw. ohne Wasser hergestellte Addukte bei der Verschäumung im angegebenen Konzentrationsverhältnis gleiches Verhalten zeigen. Beide Typen von Verbindungen ergeben ein Verschäumungsverhalten, wie es sonst nur bei Mitverwendung von z. B. Dichlordifluormethan (R12) beobachtet werden kann. Darüber hinaus werden dabei Schaumstoffe erhalten, die deutlich werniger Blasen und Überwälzungen aufweisen als die mit R12 verarbeiteten System.

## Beispiel 10

Lagerstabilitätsuntersuchungen

100 Tle. des Polyolsystems aus Beispiel 8.1 wurden mit 3 Tlen. Ethanolamin-Addukt aus Beispiel 4.5 vermischt und bei 25 °C gelagert.

| Verschäumung nach | sofort | 7 d | 14 d | 35 d | 70 d | 105 d | 0,5 Jahre |
|---|---|---|---|---|---|---|---|
| Startzeit (sec.) | 4 | 4 | 4 | 4 | 4 | 4 | 4 |
| Abbindezeit (sec.) | 78 | 77 | 77 | 76 | 78 | 78 | 80 |

Auch nach 6-monatiger Lagerzeit konnten keine Änderungen der Reaktionszeiten, des Ausschäumeffekts (Froth) und der Schaumstoffqualität beobachtet werden.

## Beispiel 11

Lagerstabilitätsuntersuchungen

100 Tle. des Polyolsystems aus Beispiel 8.1 wurden mit 3 Tln. Ethanolamin-Addukt aus Beispiel 4.5 und 1,3 Tln. Amin-Katalysator 2 gemäß Beispiel 7 vermischt und bei 60 °C gelagert.

| Verschäumung nach | sofort | 4 d | 7 d | 14 d | 28 d |
|---|---|---|---|---|---|
| Startzeit (sec.) | 4 | 4 | 4 | 4 | 4 |
| Abbindezeit (sec.) | 83 | 83 | 83 | 83 | 83 |

Auch nach 1-monatiger Lagerzeit konnten keine Änderungen der Reaktionszeiten, des Ausschäumeffekts (Froth) und der Schaumstoffqualität beobachtet werden.

## Beispiel 12

Halbharte Polyurethanschaum-Rezeptur

12.1. Vergleich
101 Teile Polyol H
9 Teile Ethylenglykol
0,4 Tle. Triethylendiamin (Dabco®)
0,1 Tle. Wasser
0,1 Tle. eines Schaumstabilisators auf Polyetherpolysiloxan-Copolymer-Basis (DC 193 von Dow-Corning)
14 Tle. Trichlorfluormethan

100 Tle. dieser Polyolkomponente wurden mit 45 Tlen. eines Polyisocyanats mit einem NCO-Gehalt von 27-29 Gew.-% und einer Viskosität von 130 ± 30 mPas bei 25 °C, das erhalten wurde durch teilweise Urethanisierung eines rohen Phosgenierungsproduktes eines Anilin/Formaldehyd-Kondensats, von dem so viel Diisocyanatodiphenylmethan abdestilliert wurde, daß der Destillationsrückstand eine Viskosität von 100 mPas bei 25 °C, sowie einen Zweikernanteil von 59,7 %, einen Dreikernanteil von 21,3 % und einen Anteil an höherkernigen Polyisocyanaten von 19,0 % aufweist, mit einem Polypropylenglykol der OH-Zahl ca. 507, umgesetzt.

12.2. (erfindungsgemäß)
Rezeptur :
101 Tle. Polyol H
5 Tle. Ethylenglykol
0,4 Tle. Triethylendiamin (Dabco®)
14 Tle. Trichlorfluormethan
0,1 Tle. Schaumstabilisator gemäß Beispiel 12,1
5 Tle. Addukt A

100 Tle. dieser Polyolkomponente wurden mit 47 Tlen. des Isocyanates aus 12.1 verschäumt.

Addukt A

In ein Gemisch aus 500 Tln. Ethanolamin, 500 Tln. Polyol I und 75 Tln. Wasser wird bei einer von 20 auf 68 °C ansteigenden Innentemperatur Kohlendioxyd eingeleitet. Dabei werden 88,5 l $CO_2$ aufgenommen. Das schwach-gelbliche, klare Produkt ist einphasig-stabil.

12.3. (erfindungsgemäß)
Rezeptur :
101 Tle. Polyol H
5 Tle. Ethylenglykol
0,4 Tle. Triethylendiamin (Dabco®)
14 Tle. Trichlorfluormethan
0,1 Tle. Schaumstabilisator gemäß Beispiel 12,1
5 Tle. Addukt B

100 Tle. dieser Polyolkomponente wurden mit 41 Tln. des Isocyanats aus 12.1 verschäumt.

Addukt B

In ein Gemisch aus 500 Tln. Diethanolamin, 500 Tln. Polyol I und 40 Tln. Wasser wird bei 60 °C Kohlendioxyd bis zur Sättigung eingeleitet. Dabei werden 32 l $CO_2$ aufgenommen. Das gelbliche Produkt ist flüssig, klar, einphasig und in dieser Form stabil.

Vergleich von 12.1, 12.2 und 12.3 (Freischäume)

| Bsp. | Startzeit (sec.) | Steigzeit (sec.) | Abbindezeit (sec.) | Raumgewicht (kg/m³) |
|---|---|---|---|---|
| 12.1 | 20 | 48 | 50 | 146,5 |
| 12.2 | 18 | 65 | 70 | 118 |
| 12.3 | 14 | 70 | 80 | 123 |

Die Addukte beschleunigen die Startphase und erhöhen die Viskosität des Reaktionsgemisches während dieser Phase. Die Addukte dieses Beispiels wirken außerdem zellöffnend.

**Patentansprüche**

1. Verfahren zur Herstellung eines zelligen Polyurethans durch Umsetzung
A) eines Polyisocyanats mit
B) einer NCO-reaktiven Komponente, enthaltend
1) mind. eine, NCO-reaktive Gruppen aufweisende Komponente des Molekulargewichtsbereiches 32-2 000 und der Funktionalität 2-8,
2) gegebenenfalls mindestens eine, NCO-reaktive Gruppen aufweisende Komponente des

Molekulargewichtsbereiches 2 000-12 000 und der Funktionalität 2-8,

3) 0,1-30 Tle., bez. auf 100 Tle. B1) + B2), eines Hydroxylgruppen aufweisenden Amin-Kohlendioxyd-Adduktes, sowie

4) gegebenenfalls Wasser, Treibmittel, Schaumstabilisatoren, Katalysatoren sowie andere an sich bekannte Hilfs- und Zusatzmittel,

dadurch gekennzeichnet, daß das Amin-Kohlendioxyd-Addukt ein bei 20 °C flüssiges, gegebenenfalls Wasser enthaltendes Addukt von Kohlendioxyd mit einem mindestens eine primäre, sekundäre oder tertiäre Hydroxylgruppe aufweisenden Ethergruppen-freien Amin mit mindestens einer Aminogruppe darstellt und

a) einen Gehalt an basischem Stickstoff von 19-3,5 Gew.-%,

b) einen Gehalt an Hydroxylgruppen von 27,5-8,5 Gew.-%,

c) einen Gehalt an Kohlendioxyd von 42-1,0 Gew.-% und

d) einen Gehalt an Wasser von 0-15 Gew.-%

aufweist, wobei das Addukt in Abwesenheit von organischen Läsungsmitteln hergestellt worden ist und wobei solche Aminkomponenten ausgenommen sind, die weniger als 10 Gew.-%, bezogen auf die Aminkomponente an Hydroxylgruppen-freien Aminen enthalten.

2. Verfahren gemäß Anspruch 1, dadurch gekennzeichnet, daß das Addukt mit einem Amin aus der Reihe

— der N-Mono-, N,N-Di- und N,N,N-Tris-(β-hydroxyalkyl-monoamine),

— der Mono- und Bis-hydroxyalkyl-diamine,

— Tris-(β-hydroxyalkyl) ethylendiamin,

— Tetra-(β-hydroxyethyl)- und -(β-hydroxypropyl) ethylendiamin,

— Tetra-(β-hydroxyethyl)-isophorondiamin,

— der oxalkylierten Tri- und Polyamine,

— von β-Hydroxyethyl- und β-Hydroxypropylhydrazin

erhalten worden ist.

3. Verfahren gemäß Anspruch 1 und 2, dadurch gekennzeichnet, daß das flüssige Amin-Kohlendioxyd-Addukt

a) einen Gehalt an basischem Stickstoff von 17-3,5 %

b) einen Gehalt an Hydroxylgruppen von 20,5-8,5 %

c) einen Gehalt an Kohlendioxyd von 36 %-2,5 Gew.-% und

d) einen Gehalt an Wasser von 3-15 Gew.-%

aufweist.

4. Verfahren gemäß Anspruch 4, 1 bis 3, dadurch gekennzeichnet, daß die flüssigen Amin-Kohlendioxyd-Addukte Solche von Ethanolamin, Diethanolamin, Propanolamin, Isopropanolamin, Diisopropanolamin und N-Hydroxyethylethylendiamin darstellen, welche in Gegenwart von Wasser hergestellt worden sind.

5. Verfahren nach Anspruch 1-4, dadurch gekennzeichnet, daß als Polyisocyanate gegebenenfalls modifizierte Toluylendiisocyanate oder Phosgenierungsprodukte von Formaldehyd/Anilin-Kondensaten verwendet werden.

6. Verfahren nach Anspruch 1-5, dadurch gekennzeichnet, daß als Komponente B1) 3-6 Hydroxylgruppen aufweisende Polyether des Molekulargewichts 200-1 000 verwendet werden.

7. Verfahren nach Anspruch 1-6, dadurch gekennzeichnet, daß die Umsetzung nach dem Vorschäumverfahren erfolgt.

**Claims**

1. A process for the production of a cellular polyurethane by reaction of

A) a polyisocyanate with

B) an NCO-reactive component containing

1) at least one component containing NCO-reactive groups and having a molecular weight in the range from 32 to 2 000 and a functionality of from 2 to 8,

2) optionally at least one component containing NCO-reactive groups and having a molecular weight in the range from 2 000 to 12 000 and a functionality of from 2 to 8,

3) 0.1 to 30 parts, base don 100 parts B1) + B2) of an amine/carbon dioxide adduct containing hydroxyl groups and

4) optionally water, blowing agents, foam stabilizers, catalysts and other auxiliaries and additives known per se,

characterized in that the amine/carbon dioxide adduct is an optionally water-containing adduct liquid at 20 °C of carbon dioxide with an amine containing at least one primary, secondary or tertiary hydroxyl group and free from ether groups and has

a) a basic nitrogen content of 19 to 3.5 % by weight,

b) a hydroxyl group content of 27.5 to 8.5 % by weight,

c) a carbon dioxide content of 42 to 1.0 % by weight and

d) a water content of 0 to 15 % by weight,
the adduct having been prepared in the absence of organic solvents and those amine components containing less than 10 % by weight, based on the amine component, of free amines being excluded.

2. A process as claimed in claim 1, characterized in that the adduct has been obtained with an amine from the group consisting of

— N-mono-, N,N-di- and N,N,N-tris-(β-hydroxyalkyl)-monoamines,
— mono- and bis-hydroxyalkyl diamines,
— tris-(β-hydroxyalkyl)-ethylenediamines,
— tetra-(β-hydroxyethyl)- and -(β-hydroxypropyl)-ethylenediamine,
— tetra-(β-hydroxyethyl)-isophoronediamine,
— alkoxylated tri- and polyamines,
— β-hydroxyethyl and β-hydroxypropyl hydrazine.

3. A process as claimed in claim 1, characterized in that the liquid amine/carbon dioxide adduct has
a) a basic nitrogen content of 17 to 3.5 % by weight,
b) a hydroxyl group content of 20.5 to 8.5 %,
c) a carbon dioxide content of 36 to 2.5 % by weight and
d) a water content of 3 to 15 % by weight.

4. A process as claimed in claims 1 to 3, characterized in that the liquid amine/carbon dioxide adducts are those of ethanolamine, diethanolamine, propanolamine, isopropanolamine, diisopropanolamine and N-hydroxy ethylenediamine which have been prepared in the presence of water.

5. A process as claimed in claims 1 to 4, characterized in that optionally modified tolylene diisocyanates or phosgenation products of formaldehyde/aniline condensates are used as the polyisocyanates.

6. A process as claimed in claims 1 to 5, characterized in that polyethers containing 3 to 6 hydroxyl groups and having a molecular weight of from 200 to 1 000 are used as component B1).

7. A process as claimed in claims 1 to 6, characterized in that the reaction is carried out by the frothing process.

## Revendications

1. Procédé pour préparer un polyuréthanne cellulaire, par réaction
A) d'un polyisocyanate avec
B) un composant pouvant réagir avec NCO, contenant
1) au moins un composant présentant des groupes capables de réagir avec NCO et dont l'intervalle du poids moléculaire se situe entre 32 et 2 000 et le nombre des groupes fonctionnels, ou fonctionnalité, va de 2 à 8,
2) éventuellement au moins un composant, présentant des groupes pouvant réagir avec NCO, dont le poids moléculaire se situe dans l'intervalle allant de 2 000 à 12 000 et dont la fonctionnalité va de 2 à 8,
3) 0,1 à 30 parties, sur la base de 100 parties de B1) + B2), d'un produit présentant des groupes hydroxyles, d'addition du bioxyde de carbone sur une amine, ainsi que
4) éventuellement de l'eau, un agent de gonflement, des stabilisants de la mousse, des catalyseurs ainsi que d'autres adjuvants et additifs connus en eux-mêmes,
procédé caractérisé en ce que le produit d'addition du bioxyde de carbone sur une amine représente un produit d'addition, liquide à 20 °C, contenant éventuellement de l'eau, du bioxyde de carbone avec une amine contenant au moins un groupe amino, dépourvue de groupe éther et présentant au moins un groupe hydroxyle primaire, secondaire ou tertiaire, et présentant
a) une teneur en azote basique de 19 à 3,5 % en poids,
b) une teneur en des groupes hydroxyles de 27,5 à 8,5 % en poids,
c) une teneur en bioxyde de carbone de 42 à 1,0 % en poids, et
d) une teneur en eau de 0 à 15 % en poids,
le produit d'addition ayant été préparé en l'absence de solvants organiques et à l'exclusion de composants amines contenant moins de 10 % en poids, sur la base du composant amine, d'amines dépourvues de groupes hydroxyles.

2. Procédé selon la revendication 1, caractérisé en ce que le produit d'addition a été obtenu a l'aide d'une amine appartenant à la série ou ensemble :

— des N-mono-, des N,N-di- et des N,N,N-tris-(β-hydroxyalkyl)-mono-amines,
— des mono- et bis-hydroxyalkyl-diamines,
— d'une tris-(β-hydroxyalkyl)-éthylènediamine,
— d'une tétra-(β-hydroxyéthyl)- et -(β-hydroxypropyl)-éthylènediamine,
— de la tétra-(β-hydroxyéthyl)-isophoronediamine,
— des triamines et polyamines oxyalkylées,
— de la β-hydroxyéthyl-hydrazine et de la β-hydroxypropylhydrazine.

3. Procédé selon l'une des revendications 1 et 2, caractérisé en ce que le produit liquide d'addition

du bioxyde de carbone sur l'amine présente :

a) une teneur en azote basique de 17 à 3,5 %,

b) une teneur en des groupes hydroxyles de 20,5 à 8,5 %,

c) une teneur en bioxyde de carbone de 36 % à 2,5 %, et

d) une teneur en eau de 3 à 15 % en poids.

4. Procédé selon l'une des revendications 1 à 3, caractérisé en ce que les produits liquides d'addition du bioxyde de carbone sur une amine sont les produits d'addition sur l'éthanolamine, la diéthanolamine, la propanolamine, l'isopropanolamine, la diisopropanolamine et la N-hydroxyéthyléthylènediamine, qui ont été préparés en présence d'eau.

5. Procédé selon l'une des revendications 1 à 4, caractérisé en ce qu'on utilise comme polyisocyanates des diisocyanates de toluylène, éventuellement modifiés, ou des produits de phosgénation de condensats formaldéhyde/aniline.

6. Procédé selon l'une des revendications 1 à 5, caractérisé en ce qu'on utilise comme composants B1) des polyéthers présentant 3 à 6 groupes hydroxyles et dont le poids moléculaire se situe entre 200 et 1 000.

7. Procédé selon l'une des revendications 1 à 6, caractérisé en ce que la réaction a lieu selon le procédé de prémoussage.